# EUROPÄISCHE PATENTSCHRIFT

(11) **EP 0 427 064 B1**
(45) Veröffentlichungstag und Bekanntmachung des Hinweises auf die Patenterteilung: **20.09.1995**
(21) Anmeldenummer: 90120558.3
(22) Anmeldetag: 26.10.1990
(51) Int. Cl.: C04B 28/14, C04B 28/04, C04B 11/30

(54) **Hydraulisches Bindemittel und seine Verwendung**
Hydraulic binder and use of it
Liant hydraulique et son utilisation

(30) Priorität: 10.11.1989 DE 3937432
(43) Veröffentlichungstag der Anmeldung: 15.05.1991
(73) Patentinhaber: Gebr. Knauf Westdeutsche Gipswerke KG, D-97343 Iphofen (DE)
(72) Erfinder: Berneth, Claus-Peter, Dr., W-8713 Marktbreit (DE); Poch, Wingolf, Dr., W-8710 Kitzingen (DE); Ruf, Heinz, Dr., W-8717 Mainbernheim (DE)
(74) Vertreter: Werner, Hans-Karsten, Dr.Dipl.-Chem.

(56) Entgegenhaltungen:
- EP-A- 0 116 524
- EP-A- 0 320 982
- US-A- 4 494 990

## Beschreibung

Gegenstand der vorliegenden Erfindung ist ein neues, verbessertes Bindemittel enthaltend Zement, α-Calciumsulfat-Halbhydrat und weitere Zusätze, welches wegen seiner besonderen Eigenschaften sehr vielseitig eingesetzt und verwendet werden kann.

Ein Bindemittel enthaltend Zement, α-Calciumsulfat-Halbhydrat und weitere Zusätze ist beispielsweise aus der DE-OS 24 36 365 bekannt. Es handelt sich um schnell abbindende Zementgemische von hoher Festigkeit, wobei eine lange dauernde Festigkeit angestrebt wird. Als Zement soll ein Portland-Zement verwendet werden, der nur sehr geringe Mengen an Tricalciumaluminat enthält, da das Tricalciumaluminat im Portland-Zement teilweise sehr langsam reagiert und mit dem Sulfat des Gipses Ettringit bildet. Der Ettringit verursacht aber bei seiner Bildung eine Volumenzunahme des abgebundenen Zementes. Diese verzögerte Ausdehnung verursacht eine verringerte Festigkeit, Rißbildung, ein Absplittern und sogar ein Zerkrümeln der ausgehärteten Zementmasse. Es soll deshalb nach diesem Stand der Technik nur Portland-Zement verwendet werden, der nicht mehr als 7 Gew.-%, vorzugsweise nicht mehr als 5 Gew.-%, Tricalciumaluminat enthält. Weiterhin soll dieser Portland-Zement nur relativ geringe Mengen an Tetracalcium-Aluminoferrit enthalten. Die Bindemittel enthalten im allgemeinen 5 bis 50 Gew.-% Portland-Zement, 49 bis 94 Gew.-% α-Calciumsulfat-Halbhydrat und ca. 1 Gew.-% fluidizierende oder dispergierende Mittel. Weiterhin ist erwähnt, das in gewissen Fällen auch Abbindeverzögerer zugesetzt werden können. Eine genauere Untersuchung dieser Bindemittel durch die Anmelderin hat ergeben, daß zwar eine länger dauernde Festigkeit erzielt werden kann, jedoch auch diese Gemische bei längerer und intensiver Belastung durch die Bildung von Ettringit ihre Beständigkeit verlieren.

Aus der DE-OS 22 22 490 ist eine schnell härtende Gußmischung hoher Dichte mit verlängerter Verarbeitbarkeitsdauer und schnellem Aushärtungsvermögen bekannt, welcher Calciumsulfat-Hemihydrat als Hauptbestandteil, Portland-Zement als Sekundärbestandteil, einen Abbindeverzögerer und ein Plastifizierungsmittel enthält. Diese Gußmischungen lassen sich zwar gut herstellen und verarbeiten, jedoch ist damit zu rechnen, daß sie bei späterer Belastung durch Feuchtigkeit und starke Temperaturschwankungen die bekannten Zersetzungserscheinungen aufweisen, zumal offensichtlich üblicher Portland-Zement zur Anwendung gekommen ist.

Aus der DE-AS 12 41 330 ist ein Verfahren zur Herstellung eines wasserfesten Bindemittels aus Gipsstein, Zement und sauren Zusätzen, wie Kieselgur oder anderen sauren Gesteinen sedimentärer oder vulkanischer Herkunft oder sauren Schlacken und Aschen, bekannt, bei dem der gemahlene Gipsstein im Gipskocher dehydratisiert wird, bei oder nach Erreichen der Halbhydratstufe dem Produkt 10 bis 50 Gew.-% Zement zugefügt werden und das gewonnene Gemisch bis zu einem homogenen Zustand vermischt und bis zu einer Endtemperatur von 130 bis 170 °C gekocht wird, woraufhin dem Gemisch die sauren Zusätze zu beliebiger Zeit während des Prozesses im Verhältnis 4 Gewichtsteile Gips zu 1 Gewichtsteil des oder der sauren Zusätze zugefügt werden. Durch Zusatz von Alkali-, Erdalkali- oder Eisenchlorid kann die Temperatur der Dehydratation des Gipses gesenkt werden und dadurch eine erhöhte Ausbeute an α-Calciumsulfat-Halbhydrat erzielt werden. Dies verbessert die Festigkeit des wasserfesten Dreikomponenten-Bindemittels. Weiterhin wird festgestellt, daß bei hohem Gehalt an Aluminatverbindungen im Zement größere Mengen Kieselgur oder der anderen sauren Zusätze erforderlich sind, während bei geringerem Gehalt an Aluminatverbindungen im Zement dementsprechend geringere Mengen notwendig sind. Das Vorhandensein der sauren Zusätze im Dreikomponenten-Bindemittel schützt die Erzeugnisse aus Gips und Zement angeblich vor der zerstörenden Wirkung der Hydrosulfoaluminatverbindungen. Die verbesserte Wasserfestigkeit und die sonstigen verbesserten Eigenschaften werden insbesondere darauf zurückgeführt, daß der gemahlene Gipsstein zusammen mit dem Zement gekocht wird, wobei je nach Feuchtigkeitsgehalt mehr α-Halbhydrat oder mehr β-Halbhydrat entsteht.

Aus der DD-PS 78 948, entsprechend der AT-PS 303 599, ist ein Verfahren zur Herstellung von Baustoffen bekannt, bei dem 50 bis 95 Gewichtsteile Calciumsulfat-Bindemittel mit einer Mischung verwendet wird, die so aufeinander abgestimmt ist, daß eine schnelle Bindung des freien Kalkes zu Ettringit möglich ist. Es soll somit nicht die Ettringitbildung vermieden werden, sondern dafür gesorgt werden, daß sich der Ettringit so rasch wie möglich und vorwiegend über die Lösungsphase bildet, so daß die bekannten und gefürchteten Treiberscheinungen vermieden werden. Untersuchungen der Anmelderin haben jedoch gezeigt, daß auch ein schnell gebildeter Ettringit zwar zur Abbindung und Härtung beiträgt, jedoch bei langfristiger Belastung durch Wasser und Temperaturschwankungen dazu führt, daß die abgebundenen Gemische rissig werden, ihre Festigkeit verlieren und letztendlich durch die Belastungen zerstört werden.

Die Erfindung hat sich somit die Aufgabe gestellt, ein Bindemittel zu entwickeln, welches langfristig belastbar ist und dabei folgende Eigenschaften aufweist:
- Temperaturunabhängiges Abbinden,
- Wasserbeständigkeit,
- in weiten Bereichen einstellbare Verarbeitungszeit,
- steiler Festigkeitsanstieg,
- hohe Endfestigkeit,
- schwindfreies Abbinden,
- leichte, zuverlässige und wirtschaftliche Herstellung und Handhabung.

Diese Aufgabe kann überraschend einfach dadurch gelöst werden, daß das Bindemittel enthaltend Zement, α-Calciumsulfat-Halbhydrat und weitere Zusätze, dadurch gekennzeichnet ist, daß es besteht aus 40 bis 60 Gew.-Teilen α-Halbhydrat, 40 bis 60 Gewichtsteilen aluminatarmem Zement, 3 bis 10 Gew.-%, vorzugsweise 5 bis 8 Gew.-%, feinteiliger Kieselsäure sowie gewünschtenfalls bis zu 2 Gew.-% Verflüssiger, Verzögerer und/oder Beschleuniger. wobei, das α-Halbhydrat aus Rauchgasgips hergestellt ist und eine Teilchengröße von 98 % < 40 µm aufweist. Vorzugsweise weist der Rauchgasgips eine Einstreumenge von mindestens 250 g nach DIN 1168, ein Wasser-Gips-Verhältnis von 0,41 oder weniger bei einem Fließmaß von 21 cm gemäß DIN 51020 auf. α-Halbhydrat aus natürlichem Gips muß die gleichen Spezifikationen aufweisen. Auch er sollte vorzugsweise auf eine Teilchengröße 98 % < 40 µm vermahlen werden.

Als aluminatarmer Zement wird vorzugsweise Portland-Zement HS nach DIN 1164 verwendet, welcher einen C₃A-Gehalt von < 3 % besitzt. Als feinteilige Kieselsäure wird vorzugsweise das Abfallprodukt der Ferro-Silicium-Herstellung (Micro Silica) und/oder das salzsaure Aufschlußprodukt von Schmelzkammergranulaten verwendet. Die Herstellung dieses Aufschlußproduktes und die Eigenschaften dieses Aufschlußproduktes sind ausführlich beschrieben in der deutschen Patentanmeldung P 39 22 508.9 (KW-29).

Als weitere Zusätze werden alle üblichen für diese Bindemittelgruppe brauchbaren Zusätze verwendet. Als Dispergiermittel und Verflüssiger haben sich insbesondere Melamin-Formaldehydharze, Naphthalinsulfonsäure-Formaldehydharze und Ligninsulfonate bewährt. Als Verzögerer eignen sich insbesondere Hydroxycarbonsäuren, Aminosäuren, Eiweißhydrolysate, tierischer Leim und Kombinationen hieraus. Als Beschleuniger eignen sich insbesondere Alkalisulfate, insbesondere Lithiumsulfat. Durch geeignete Abstimmung dieser Zusätze kann die Verarbeitbarkeit in weiten Bereichen variiert und an den gewünschten Zweck angepaßt werden. Durch die Kombination von Verzögerern und Beschleunigern werden trotz ausreichend lang einstellbarer Verarbeitungszeiten steile Festigkeitsentwicklungen und besonders hohe Endfestigkeiten erzielt.

Erfindungswesentlich ist, das ein aluminatarmer Zement verwendet wird, der deshalb auch hoch sulfatbeständig ist und aufgrund seiner chemischen Zusammensetzung kaum in der Lage ist, viel Ettringit zu bilden. Ideal wäre ein Zement der völlig aluminatfrei ist. In der Praxis gibt es jedoch derartigen Zement nicht.

Weiterhin ist erfindungswesentlich, das soviel feinteilige Kieselsäure vorhanden ist, das diese den Gehalt an freiem und später frei werdendem Calciumhydroxid binden kann, so daß sich auch aus den geringen Mengen an Aluminat des Zements kein Ettringit bilden kann.

Die abgebundenen erfindungsgemäßen Bindemittel enthalten somit praktisch überhaupt keinen Ettringit und sind auch nicht in der Lage, ihn später zu bilden.

Weiterhin ist erfindungswesentlich, das der Gehalt an α-Halbhydrat unter 60 % des Gesamtgemisches liegt, da höhere Gehalte sowohl die Wasserfestigkeit negativ beeinflussen als auch dazu führen, daß sich das Gemisch beim Abbinden ausdehnt. Bei einem Gehalt von mehr als 60 % Zement hingegen schwindet das Gemisch beim Abbinden. Nur in dem Bereich 40 bis 60 Gewichtsteile α-Halbhydrat und 40 bis 60 Gewichtsteile aluminatarmer Zement entsteht ein praktisch schwindfrei abbindendes Gemisch.

Unter temperaturunabhängigem Abbinden ist zu verstehen, das im Temperaturbereich von 0°C bis 60°C gearbeitet und ausgehärtet werden kann und dabei stets und zuverlässig, vollständig und raumstabil abgebundene wasserfeste Produkte entstehen.

Die Eigenschaften des erfindungsgemäßen Bindemittels sind sowohl bei der Verarbeitung, beim Abbinden als auch im abgebundenen Zustand so hervorragend, das es für die verschiedensten Zwecke verwendet werden kann und dabei wiederum hervorragende Eigenschaften entwickelt. Einige dieser Verwendungen sind völlig neu und Gegenstand weiterer Patentanmeldungen vom gleichen Tage, nämlich:
- Gipsbauplatte mit Kaschierungen aus beschichteten Glasfaseryliesen und Verfahren zur Herstellung derselben
   (P 39 37 433.5 (KW-33));
- Verschleißschicht für Nutzböden (P 39 37 431.9 (KW-36);
- Faserhaltige Bauplatte und Verfahren zur Herstellung derselben
   (P 39 37 430.0 (KW-37); und
- Mit einem Vlies, Gelege oder Gewebe aus Glasfasern bewehrte Bauplatte
   (P 39 37 429.7 (KW-38).

Das temperaturunabhängige Abbinden im Bereich zwischen 0 und 60 °C, die Wasserbeständigkeit des abgebundenen Bindemittels, das schwindfreie Abbinden, die in weiten Bereichen einstellbare Verarbeitungszeit, der steile Festigkeitsanstieg und die hohe Endfestigkeit ermöglichen somit unter anderem folgende Verwendungen, nämlich die Verwendung als wasserfester, schwindfrei abbindender Putzmörtel, Reparaturmörtel, Betonsaniermörtel, Ausgleichsmörtel sowie zusammen mit weiteren Zusätzen und Materialien als wesentliche Komponente von Dünnputz, Fugenspachtel, Spritzmörtel, Fließestrich, Fliesenkleber, die Beschichtung von Glasfaseryliesen, hochfesten, wasserbeständigen, faserhaltigen Bauplatten und hochfesten wasserbeständigen mit beschichtetem Glasylies oder Gewebe kaschierten Bauplatten.

In den nachfolgenden Beispielen sind das erfindungsgemäße Bindemittel und einige seiner Verwendungen näher erläutert:

### BEISPIEL 1

Das Bindemittel
44,0 Gew.-% Portland-Zement 45 F-HS (C₃A < 3 %),
49,5 Gew.-% α-Halbhydrat aus Rauchgasgips (Teilchengröße zu 98 % < 40 µm),
5,0 Gew.-% feinteilige Kieselsäure (Abfallprodukt der Ferro-Silicium-Herstellung - Micro Silica -),
1,0 Gew.-% Verflüssiger (Melamin-Formaldehydharz) und
0,5 Gew.-% Verzögerer und Beschleuniger
werden homogen miteinander vermischt. Dieses Gemisch kann wie folgt verwendet werden:

### BEISPIEL 2

### Schwindfreier Estrich

Ein Teil Bindemittel wird mit 2 bis 5 Teilen Sand (0 - 8 mm) und Wasser zu einem pumpbaren, plastischen Mörtel gemischt, der sich hervorragend zur Herstellung von schwindfreien, frühbelastbaren Estrichen mit sehr hohen Endfestigkeiten eignet. Dieses Gemisch ist geeignet zur Herstellung von großflächigen Verbundestrichen, Estrichen auf Trennschichten und schwimmenden Estrichen ohne Dehnungsfugen im Innen- und Außenbereich.

### BEISPIEL 3

### Putzmörtel, Reparaturmörtel, Ausgleichsmörtel

Durch Magern des Bindemittels mit 2 bis 6 Teilen Sand, Leichtfüllstoffen, wie Perlite oder Vermiculite oder Mischungen aus diesen, und durch Zusätze zur Erhöhung der Wasserretention, wie z.B. Celluloseether, und zur Konsistenzregulierung erhält man einen schwindfreien Putzmörtel, Reparaturmörtel, Betonsaniermörtel oder Ausgleichsmörtel. Die Gemische zeichnen sich aus durch Schwindfreiheit, steile Festigkeitsentwicklung, hohe Endfestigkeit, temperaturunabhängiges Abbinden, Wasserbeständigkeit und Wirtschaftlichkeit.

### BEISPIEL 4

### Dünnputz und Fugenspachtel

Das Bindemittel wird mit bis zu 70 % Quarzmehl und Microhohlkugeln, 0,05 bis 1 % Celluloseether sowie verdickenden Zusätzen abgemischt. Diese Mischungen eignen sich als Dünnputze auf Zement- oder Gipsunterputzen sowie speziell für beschichtete Bauplatten sowie als Fugenspachtel für solche Bauplatten.

### BEISPIEL 5

### Spritzmörtel

Das Bindemittel wird mit 1 bis 6 Teilen Sand oder Kalksteingrieß gemagert, mit einem geeigneten Stellmittel, wie Xanthangum, eingestellt. Man erhält einen schwindfreien Spritzmörtel mit hoher Früh- und Endfestigkeit. Dieser Spritzmörtel eignet sich für die Betonsanierung, den Tunnelbau und als Bergbaumörtel.

### BEISPIEL 6

### Fließestrich

Das Bindemittel wird mit 40 bis 80 % Quarzsand, 0,5 % Entschäumer und Stabilisator vermischt und auf ein Mörtelfließmaß von 20 cm eingestellt (z.B. WFV 0,10 - 0,16). Man erhält so einen pumpbaren, selbstverlaufenden schwindfreien, frühbelastbaren, feuchtigkeits- und nässestabilen Fließestrich mit sehr hohen Endfestigkeiten.

### BEISPIEL 7

### Beschichtetes Glasfaservlies

Das Bindemittel wird ohne Magerungsmittel, aber durch Zusatz eines Beschleunigers mit Wasser angerührt und als dünnflüssige Suspension in dünner Schicht auf ein Glasfaserylies aufgetragen. Das Glasfaserylies wird bereits nach dem ersten Verfestigen aufgerollt, transportiert und gelagert und ist ausgezeichnet geeignet zur Herstellung von Gipsbauplatten mit Kaschierungen aus beschichteten Glasfaseryliesen gemäß Patentanmeldung P 39 37 433.5 (KW-33).

### BEISPIEL 8

### Fliesenkleber

Das Bindemittel wird mit Magerungsmitteln und Zusätzen vermischt, so daß es insgesamt besteht aus
14,0 Gew.-% α-Halbhydrat aus Rauchgasgips,
13,0 Gew.-% Portland-Zement 45 F-HS (C₃A < 3 %),
1,5 Gew.-% feinteilige Kieselsäure,
40,0 Gew.-% Quarzsand 0 - 0,5 mm
29,0 Gew.-% Quarzmehl,
0,3 Gew.-% Melamin-Formaldehydharz,
0,7 Gew.-% Beschleuniger, Verzögerer, Celluloseether,
1,5 Gew.-% Kunststoffdispersionspulver (Vinylacetat-Ethylen-Copolymer).

Mit Wasser angerührt erhält man einen ausgezeichneten Fliesenkleber.

## Patentansprüche

1. Bindemittel enthaltend Zement, α-Calciumsulfat-Halbhydrat und weitere Zusätze, dadurch gekennzeichnet, daß es besteht aus 40 bis 60 Gew.-Teilen α-Halbhydrat, 40 bis 60 Gewichtsteilen aluminatarmem Zement, 3 bis 10 Gew.-%, vorzugsweise 5 bis 8 Gew.-%, feinteiliger Kieselsäure sowie gewünschtenfalls bis zu 2 Gew.-% Verflüssiger, Verzögerer und/oder Beschleuniger, wobei das α-Halbhydrat aus Rauchgasgips hergestellt ist und eine Teilchengroße 98 % < 40 µm aufweist.

2. Bindemittel gemäß Anspruch 1, dadurch gekennzeichnet, daß als aluminatarmer Zement Portlandzement HS nach DIN 1164, C₃A < 3 % verwendet wird.

3. Bindemittel gemäß einem der Ansprüche 1 oder 2, dadurch gekennzeichnet, daß als feinteilige Kieselsäure das Abfallprodukt der Ferro-Silicium-Herstellung (Micro Silica) und/oder das salzsaure Aufschlußprodukt von Schmelzkammergranulaten verwendet wird.

4. Bindemittel gemäß einem der Ansprüche 1 bis 3, dadurch gekennzeichnet, daß als weitere Zusätze Melamin-Formaldehydharze, Napkthalinsulfonsäure-Formaldehydharze, Ligninsulfonate, Hydroxycarbonsäuren, Aminosäuren, Eiweißhydrolysate, tierische Leime und Alkalisulfate verwendet werden.

5. Verwendung der Bindemittel gemäß einem der Ansprüche 1 bis 4 für die Herstellung von Baustoffen, Baustoffmischungen oder Bauteilen, wie z.B. wasserfester, schwindfrei abbindender Putzmörtel, Reparaturmörtel, Betonsaniermörtel, Ausgleichsmörtel oder zusammen mit weiteren Zusätzen und Materialien als wesentliche Komponente in Dünnputz, Fugenspachtel, Spritzmörtel, Fließestrich, Fliesenkleber, Beschichtungen von Glasfaservliesen, hochfesten, wasserbeständigen, faserhaltigen Bauplatten oder hochfesten wasserbeständigen mit beschichtetem Glasvlies kaschierten Bauplatten.

## Claims

1. A binder containing cement, α-calcium sulfate hemihydrate and further additives, characterized in that it consists of from 40 to 60 weight parts of α-hemihydrate, from 40 to 60 weight parts of aluminate-poor cement, from 3 to 10% by weight, preferably from 5 to 8% by weight, of finely divided silicic acid, and, if desired, up to 2% by weight of liquifiers, retarders and/or promoters wherein said α-hemihydrate is prepared from flue gas gypsum and has a 98% particle size of < 40 µm.

2. The binder according to claim 1, characterized in that Portland cement HS according to DIN 1164, C₃A < 3%, is used as said aluminate-poor cement.

3. The binder according to any of claims 1 or 2, characterized in that the waste product from ferrosilicon preparation (Micro Silica) and/or the product of hydrochlorid acid solubilization of melting chamber granulates is used as said finely divided silicic acid.

4. The binder according to any of claims 1 to 3, characterized in that melamin/formaldehyde resins, naphthalenesulfonic acid/formaldehyde resins, ligninsulfonates, hydroxycarboxylic acids, amino acids, protein hydrolysates, animal glues, and alkali metal sulfates are used as said further additives.

5. The use of the binders according to any of claims 1 to 4 for the preparation of construction materials, mixtures of construction materials, or building parts, such as e.g. water-resistant, unshrinkably setting plastering mortar, repair mortar, concrete patching mortar, equalizing mortar, or along with other additives and materials as an essential component of thin plasters, jointing fillers, spraying mortars, floating floor screeds, adhesives for floor tiles, coatings for non-woven glass fibres, high-strength water-resistant fibre-containing building boards or high-strength water-resistant building boards backed with coated non-woven glass fibre.

## Revendications

1. Liant contenant du ciment, du sulfate de calcium α semi-hydraté et d'autres additifs, caractérisé en ce qu'il est constitué de 40 à 60% en poids de semi-hydrate α, de 40 à 60% en poids de ciment à faible teneur en aluminate, de 3 à 10% en poids et, de préférence, de 5 à 8% en poids de silice finement divisée ainsi que, éventuellement, jusqu'à 2% en poids de fluidifiant, de ralentisseur et/ou d'accélérateur, le semi-hydrate α étant fabriqué en partant de gypse de gaz de fumées et présentant une dimension des particules de 98% < 40 µm.

2. Liant selon la revendication 1, caractérisé en ce que l'on utilise comme ciment à faible teneur en aluminate du ciment Portland HS selon DIN 1164, C₃A < 3%.

3. Liant selon l'une des revendications 1 ou 2, caractérisé en ce que l'on utilise comme silice finement divisée le résidu de la fabrication de ferro-silicium (microsilice) et/ou le produit de dissolution par l'acide chlorhydrique des granulés de fonderie.

4. Liant selon l'une des revendications 1 ou 3, caractérisé en ce que l'on utilise comme autres additifs des résines mélamine-formaldéhyde, des résines d'acide naphtalinesulfonique-formaldéhyde, des lignosulfonates, des acides hydrocarboxyliques, des acides aminés, des produits d'hydrolyse de l'albumine, des colles animales et des sulfates alcalins.

5. Utilisation des liants selon l'une des revendications 1 à 4, pour la fabrication de matériaux de construction, de mélanges de matériaux de construction ou d'éléments de construction tels que, par exemple, mortier d'enduit résistant à l'eau et faisant prise sans retrait, mortier de réparation, mortier de traitement des bétons, mortier d'égalisation ou, avec d'autres matériaux et additifs, comme composant principal pour les enduits minces, les mortiers de rejointoyage, les mortiers à projeter, les chapes à couler, les colles pour carrelages, les enduits pour nappes de fibres de verre, les panneaux de construction contenant des fibres à haute résistance et résistant à l'eau ou les panneaux de construction à haute résistance mécanique résistant à l'eau, plaqués avec des nappes de fibres de verre enduites.
